# EUROPEAN PATENT APPLICATION

(11) **EP 2 492 730 A1**
(43) Date of publication of application: **29.08.2012**
(21) Application number: 11155334.3
(22) Date of filing: 22.02.2011
(51) Int. Cl.: G02B 6/38, G02B 6/44, G02B 6/255

(54) **Air blown optical fibre fixation**

(71) Applicant: Tyco Electronics Raychem BVBA, 3010 Kessel-Lo (BE)
(72) Inventor: Diepstraten, Patrick Jacques Ann, 3550 Heusden-Zolder (BE); Vastmans, Kristof, 3370 Boutersem (BE); Van Genechten, Geert, 2222 Wiekevorst (BE)
(74) Representative: Grünecker, Kinkeldey, Stockmair & Schwanhäusser

(57) **Abstract**

The present invention relates to fixing device (1, 1') for fixing an optical fibre (100) with respect to a tube (200) accommodating the fibre (100), comprising a housing (2, 2') which is adapted to at least partially enclose the fibre (100) and an end section (201) of the tube (200). Further, the present invention relates to a kit for a fixing device (1; 1') as well as to a method for fixing an optical fibre (100) with respect to a tube (200) accommodating the fibre (100). In order to fix the optical fibre (100) with respect to the tube (200) in an environmentally friendly and time-efficient way, the present invention provides a sleeve (50, 50'), which is adapted to hold the fibre (100) and to be arrested at the housing (2, 2').

## Description

The present invention relates to a fixing device for fixing an optical fibre with respect to a tube accommodating the fibre, especially an air blow optical fibre with respect to an air blown optical fibre tube, comprising a housing which is adapted to at least partially enclose the fibre and an end section of the tube.

Further, the invention relates to a kit for a fixing device for fixing an optical fibre with respect to a tube accommodating the fibre.

Finally, the invention relates to a method for fixing an optical fibre with respect to a tube accommodating the fibre.

Optical fibres are increasingly used in information technologies (IT-applications) for transmitting digital signals such as data and other information. As the fibres themselves are rather thin and brittle and therefore prone to damage e.g. by snapping and cracking, they are often guided in tubes protecting them. These tubes may be rather short, i.e. they may have a length of centimetres or metres, but may also be very long, i.e. they may have a length of over one kilometre.

The fibres may come as units comprising a fibre element with several individual fibres. The fibres may be bundled to bundles comprising several fibres. Such a bundle or several bundles may be accommodated in a tube. The tubes again may be bundled within cables, wherein they form microducts for the fibres or fibre bundles.

Especially for long distances, there is a tendency that fibre bundles are blown into the single tubes, forming a miniature duct system, by using an airflow which drives the fibre bundle, i.e. a free end of the fibre to its destination. The destinations may be organisers, closures, boxes, transmitter modules, or multiplexers or other network elements, as well as a simple splice for example, where the ends of two fibres are connected to each other. The optical fibres have to be fixed with respect to the tubes accommodating them in order to eliminate any stresses which could act on any splices or the free end of the fibres jutting out of the respective tube. In other words, a strain relief for the fibres and/or the free ends of the tubes is desired.

According to the prior art, strain relief is achieved in that resins or adhesives, mostly chemical agents, are used to embed the fibre therein and/or to glue the fibre or a splice to a substrate. The substrate may be e.g. provided at the housing.

Disadvantages arising from the resins adhesives used for fixing the optical fibres according to the prior art are that the adhesives are often harmful to the environment and/or to the health of any fitter working with optical fibres. Moreover, the adhesives have a limited shelf-life and may therefore be costly because they have to be regularly replaced even though they are not used up. A disposal of the resins or adhesives again bears environmental risks and may be costly as expenses for recycling may arise therefrom. Above that, applying resins or adhesives may be time-consuming as their hardening has to be awaited before further processing and mounting is possible, which again may be costly.

In view of these disadvantages, it is an object of the present invention to reduce the environmental impact of optical fibre installations as well as the health risks and costs arising therefrom.

This object is achieved according to the present invention for the fixing device mentioned in the beginning of this description in that a sleeve is provided, which is adapted to hold the fibre and to be arrested at the housing.

For the kit mentioned in the beginning of this description, the object is achieved in that the kit comprises a sleeve which is adapted to hold the fibre and to be arrested at the housing.

For the method mentioned in the beginning of this description, the object is achieved in that the method comprises the steps of holding the fibre with a sleeve and arresting the sleeve at a housing.

These solutions according to the present invention have the advantage that any adhesives or chemical agents for fixing the fibre may be omitted. In other words, the fibre is affixed essentially without the application of any adhesives. By omitting the adhesives, on the one hand, the environmental and health impacts arising from optical fibre installation are reduced. On the other hand, installation times may be reduced because any times for hardening adhesives are omitted. The fibre may simply be mechanically connected to the sleeve. The sleeve may immobilise the fibre at least in the axial or longitudinal direction using the sleeve for fixing the fibre is an easy-to-apply, fast and convenient concept which may be carried out with existing tools such as crimping tools currently used in the field of optical fibre handling.

The above-mentioned solutions according to the present invention may be combined in any way with any one of the following advantageous embodiments of the present invention respectively and further improved.

The sleeve may be easily deformed in order to hold the fibre in that the sleeve is adapted to be at least partially wrapped around the fibre. For wrapping the sleeve around the fibre, a crimping tool may be used. In other words, the sleeve may be crimped to the fibre.

Attaching the sleeve to the fibre may be facilitated in that the sleeve may be provided with at least two legs which are connected to each other via a hinge. At the hinge, the legs may be moved with respect to each other such that the fibre is held between the legs by force fit and/or positive fit.

Wrapping the sleeve around the fibre or hinging the at least two legs may be further facilitated in that the sleeve may have a bending zone where the sleeve may be bent in order to hold the fibre. The bending zone may form the hinge. The hinge and the bending zone may help to precisely deform or apply the sleeve.

Precisely holding the fibre with the sleeve may be facilitated in that the sleeve may be provided with at least one groove which is adapted to at least partially accommodate the fibre. Thereby, the fibre may be guided within the groove. This helps both in preventing that the fibre slips in an axial direction of the fibre with respect to the sleeve or is displaced when applying the sleeve to the fibre.

For easily arresting the sleeve at the housing, the sleeve may comprise at least one cutting edge being adapted to cut into the housing. The cutting edge enables the sleeve to be pressed into an accommodation or receptacle formed at the housing such that the sleeve cuts into this accommodation or receptacle and overlaps with the housing. By cutting into the housing, a positive fit of the sleeve at the housing may be provided.

Wrapping the sleeve around the fibre, crimping as well as bending the sleeve and cutting into the housing with the sleeve may be facilitated in that the sleeve may be at least partially formed of metal. For example, an outer part of the sleeve may be formed of metal and an inner part of the sleeve facing towards the fibre may be formed of any resilient material which helps in snugly accommodating the fibre within the sleeve. Alternatively, an outer part of the sleeve may be formed of a plastic material, such as PC-ABS.

Arresting the fibre at the housing may be further facilitated in that the housing may provide at least one clamping element which is adapted to hold the sleeve. The sleeve may be pressed into the clamping element for example, which may comprise at least two clamping limbs. The clamping elements may provide an accommodation or a receptacle for the sleeve.

Arresting the fibre at the housing in an axial direction of the fibre may be facilitated in that at least one limit stop is formed at the housing, the at least one limit stop may be adapted to block the sleeve at least in a longitudinal direction of the sleeve. The sleeve may be blocked between two limit stops such that it is literally immobilised within the housing at least in the longitudinal direction.

The tube may be easily locked with respect to the housing in that the housing may provide a locking zone adapted to arrest a ferrule for holding an end section of the tube. The ferrule may be slid onto the tube and may centre the tube with respect to the housing of an opening thereof, through which the tube enters the housing.

The fibre, the sleeve and/or the ferrule may be easily accommodated within the housing or arrested at the housing in that the housing may be formed of two complementary housing parts which are at least partially separated from each other in an open state of the housing essentially along a longitudinal direction of the housing. The two housing parts may be joined in order to close the housing and arrest the fibre, the sleeve and/or the ferrule between each other.

The housing may be easily locked in a closed state in that the fixing device may comprise a locking member which may be adapted to at least partially encompass the housing and to lock the housing in the closed state.

The solutions according to the present invention, especially in relation to the above-mentioned method, may be improved in that, in a further step, the housing is filled with a sealing substance. Especially, when the fixing device is applied in organisers, closures, boxes or other network elements, which require the sealing of cables, e.g. in gas- and/or water-block connectors for air blown fibre applications, the sealing substance may provide an easy to apply and reliable sealing of the fibre with respect to the tube and/or the housing and its interior with respect to the tube and/or the environment. The sealing substance may e.g. be inserted or injected into an internal space of the housing. The internal space of the housing may be designed such that it facilitates embedding the optical fibre and/or the end of the tube within the sealing substance. As a sealing substance, a silicone gel or mastics may be applied for example.

The invention will be described in more detail by way of example hereinafter with reference to the accompanying drawings which illustrate advantageous embodiments. The described embodiments are only possible configurations in which the individual features may however, as described above, be implemented independently of each other or be omitted. Corresponding elements illustrated in the drawings are provided with the same reference signs. Parts of the description relating to the same elements in different drawings are omitted.

In the drawings:
- Fig. 1: is a schematic explosive view of a fixing device according to an embodiment of the present invention and an optical fibre provided with a sleeve according to an embodiment of the present invention, the fibre being partly accommodated within an optical fibre tube;
- Fig. 2: is a schematic cross-sectional view taken along a cross-sectional plane extending through the fibre, the tube accommodating the fibre and the fixing device encompassing the tube and the fibre:
- Fig. 3: is a another schematic cross-sectional view of the fibre, the tube and the fixing device illustrated in Fig. 2 along a cross-sectional plane extending between two housing parts of a housing of the fixing device as well as through the fibre end the tube accommodating the fibre;
- Fig. 4: is a schematic cross-sectional view of the fibre, the tube and the fixing device shown in Fig. 3 along a cross-sectional line A-A illustrated therein;
- Fig. 5: is another schematic cross-sectional view of the fibre and the fixing device shown in Fig. 3 along a cross-sectional line B-B illustrated therein;
- Fig. 6: is a schematic perspective view of another embodiment of a fixing device according to the present invention, accommodating a fibre and a tube partly guiding the fibre;
- Fig. 7: is a schematic cross-sectional view of the fibre, the tube and the fixing device shown in Fig. 6 along the cross-sectional line C-C illustrated therein.

In the following, a fixing device 1, 1' for immobilising an optical fibre 100 with respect to an optical fibre tube 200 according to the present invention as well as a kit for the fixing device 1,1' and a method for fixing the fibre 100 with respect to the tube 200 are explained with reference to the respective embodiments thereof shown in the figures.

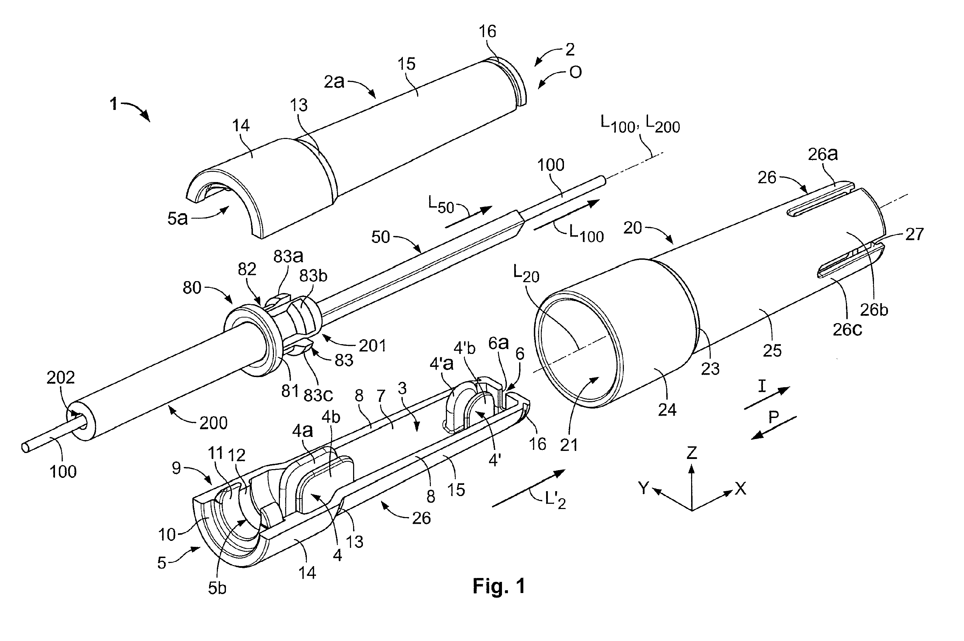

Fig. 1 is a schematic explosive representation of the fixing device 1. The fixing device 1 comprises a housing 2. The housing 2 is divided into two complementary housing parts 2a and 2b. The housing 2 provides an inner space 3 for accommodating the fibre 100 and an end section i.e. free end 201 of the tube 200. Within the tube 200, the fibre 100 is sheltered within an inner space 202 of the tube 200. The fibre 100 is held by a sleeve 50. The sleeve 50 is designed such that it may be held by clamping elements 4 and 4' within the housing 2. The clamping elements 4 and 4' each comprise clamping limbs 4a, 4b and 4'a, 4'b, respectively.

For leading the fibre 100 and the tube 200 into the housing 2, the housing is provided with an inlet opening 5 which is formed by an opening section 5a and an opening section 5b of the housing parts 2a and 2b, respectively. An outlet opening 6 is arranged at the housing 2 on the side of the housing 2 which is opposite to the inlet opening 5. Similar to the inlet opening 5, the outlet opening 6 is formed by an opening section 6a and an opening section 6b on the housing parts 2a and 2b, respectively. Between the inlet opening 5 and the outlet opening 6, the fibre 100 held by the sleeve 50 is guided by the clamping elements 4, 4' through the inner space 3 with a certain distance to a wall portion 7 of the housing.

At the wall portion 7, the two housing parts 2a and 2b are shaped such that they provide planar faces 8 which extend essentially in parallel to a longitudinal direction L₂ of the housing 2. In other words, the housing 2 is sectioned in two halves in the form of the housing parts 2a and 2b along the longitudinal direction L₂ which runs in parallel to a longitudinal direction X of the fixing device 1. The longitudinal direction X runs perpendicularly to a lateral direction Y of the fixing device 1. Both the longitudinal direction X and the lateral direction Y run perpendicularly to a height direction Z of the fixing device 1. A longitudinal direction L₁₀₀ of the fibre as well as a longitudinal direction L₅₀ of the sleeve 50 and a longitudinal direction L₁₀₀ run essentially in parallel to the longitudinal direction X of the fixing device 1.

Further, a ferrule 80 is provided which encompasses the end section 201 of the tube 200. The ferrule 80 is formed axially symmetric such that it provides an outer rim 81, a neck 82 and a clamping member 83. The clamping member 83 comprises clamping arms 83a, 83b and 83c, which encircle the end section 201 and are arranged radially around the end section 201 such that they clamp the end section 201 between each other.

A locking zone 9 of the housing 2 has a shape which is complementary to that of the ferrule 80. In order to accommodate the ferrule 80 at the inlet opening 5, the locking zone provides an outer groove 10 which is formed complementary to the outer rim 81, as well as an inner rim 11 which is formed complementary to the neck 82, and an inner groove 12 which is formed complementary to the clamping member 83.

Moreover, the fixing device 1 may comprise a locking member 20 for locking the housing 2 in a closed state C (not yet shown) into which the housing 2 may be transferred from its open state O shown in Fig. 1, where the housing parts 2a and 2b are not yet fully mated. The locking member 20 is formed as a ferrule. The locking member 20 provides an opening 21 through which the housing 2 may be inserted into the locking member 20. For inserting the housing 2 into the locking member 20, the housing 2 may be inserted into the locking member 20 along an insertion direction I of the housing 2 running essentially in parallel to a longitudinal direction L₂₀ of the locking member which again extends essentially in parallel to the longitudinal direction X of the fixing device. In other words, along a push-on direction P of the locking member running opposite to the insertion direction, the locking member 20 may be pushed onto the housing 2 in its closed state C. Hence, the locking member 20 acts like a pusher.

The locking member 20 in Fig. 1 is only shown by way of an example. Alternative and/or additional means for locking the housing 2 in the fixed state may for example comprise snapping or latching members that may be integrated into the housing 2. Other appropriate locking means such as a tie wrap or clip may also be used. This configuration eliminates the need for the locking member 20.

In order to arrest the locking member in a locked state L (not yet shown) of the fixing device 1, the housing provides a ledge 13 which is formed between a collar 14 and a shaft section 15 of the housing. The collar is formed where the locking zone 9 is located in order to take into account the increased diameter of the ferrule 80 with respect to the diameter of the tube 200. Analogously to the housing 2, the locking member 20 is provided with a collar 24, a shaft 25 and a latch 23 formed therebetween.

In order to arrest the locking member 20 at the housing 2 in its closed state C, the housing is further provided with a latching element 16 at the end of the shaft 15 pointing in the direction of the longitudinal axis L₂. The latching element 16 is formed as a circular groove running along an outer circumference of the housing 2. A counter latching element 26 is formed at the locking member 20 and comprises latches 26a, 26b, 26c, each provided with noses 27 which are adapted to snap into the latching element 16 in the locked state L. The latches 26a, 26b and 26c are arranged radially around the longitudinal axis L₂₀ of the locking member 20.

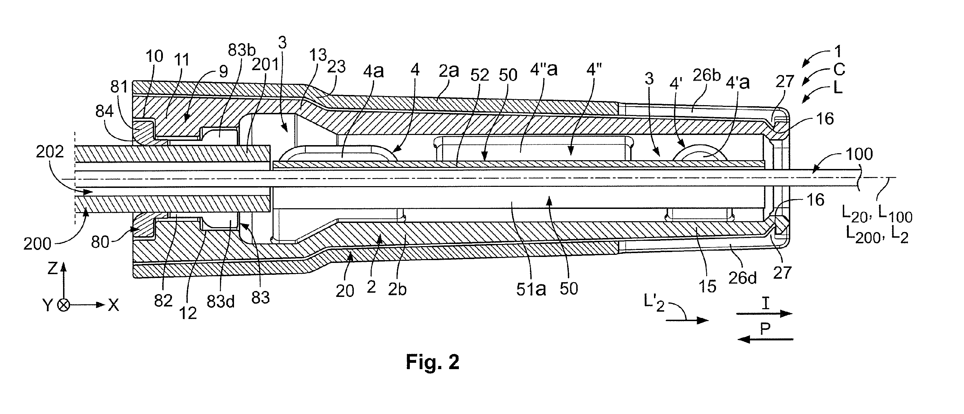

Fig. 2 shows the fixing device 1 with the housing 2 in the closed state C and the locking member 20 in the locked position L in a schematic cross-sectional view along the longitudinal axis L₂₀, L₁₀₀ and L₂₀₀ of the locking member 20, the fibre 100, and the tube 200, respectively. The cross-section is made in a plane spanned by the longitudinal direction X and the height direction Z. The housing 2, the locking member 20, the fibre 100 and the tube 200 are arranged coaxial.

The fibre 100 is held within the sleeve 50 between a first leg or limb 51 a and a second leg or limb 51 b (not yet shown) of the sleeve 50. The first and the second limb 51 a and 51 b are connected to each other via a hinge 52. The sleeve 50 is held by the clamping element 4 and the clamping element 4' between their respective clamping limbs 4a, 4b and 4'a, 4'b. A further clamping element 4" is provided at the housing part 2a. Analogously to the clamping elements 4 and 4', the clamping element 4" comprises two clamping limbs 4"a and 4"b (not yet shown).

The ferrule 80 is arranged coaxial to the locking member 20, the fibre 100 and the tube 200. The ferrule 80 encompasses the tube 200 and holds the tube 200 with its clamping elements 83a (not shown here), 83b, 83c (not shown here) and a further clamping element 83d. The ferrule 80 is centred with respect to the longitudinal axis L₂ of the housing 2 and immobilised in a longitudinal direction L'₂ of the housing 2 with the help of the locking zone 9. At the locking zone 9, the outer groove 10 is in mesh with the outer rim 81, the inner rim 11 is in mesh with the neck 82 and the inner groove 12 is in mesh with the clamping member 83. Thereby, all offsets between the outer groove 10, the inner rim 11, the inner groove 12 on the side of the housing 2 as well as the outer rim 81, the neck 82 and the clamping member 83 on the side of the ferrule 80 abut or at least lie in the vicinity to each other such that the ferrule 80 is immobilised and centred. Additionally, the ferrule 80 is provided with a circular bevel 84 at the outer rim 81 in order to prevent the tube from being notched when moving in parallel to the height direction Z such that the tube 200 is bent at the outer rim 81.

The inner space 3 of the housing 2 widens where the end section 201 of the tube 200 is located and the fibre leaves the tube 200 before entering the sleeve 50. Thereby, a sealing substance filling up the inner space 3 may easily flow around the transition zone between the tube and the inner space of the housing and the sleeve 50 in order to securely seal the inner space 3 against the environment and the tube such that the fibre 100 is sealed up and protected within the housing 2.

The locking member 20 in the locked position L fits snugly around the housing 2. The ledge 23 on the locking member 20 abuts the ledge 13 on the housing 2 in a direction against the longitudinal direction X. The latches 26a (not shown here), 26b, 26c (not shown here) and a further latch 26d of the counter latching element 26 radially enclose the housing 2 at the end of its shaft section 15 pointing in a longitudinal direction X. The noses 27 on each of the latches 26a to 26d have snapped into the latching element 16 on the housing. Hence, the locking member 20 is locked and immobilised in and against the longitudinal direction X.

Further, the outer shape of the housing 2 and the inner shape of the locking member 20 taper, i.e. narrow, in the longitudinal direction X. Thereby, the locking member 20 tightly encompasses the housing 2 when being slid onto the housing 2 in the push-on direction P, i.e. the housing 2 is inserted into the locking member 20 in an insertion direction l.

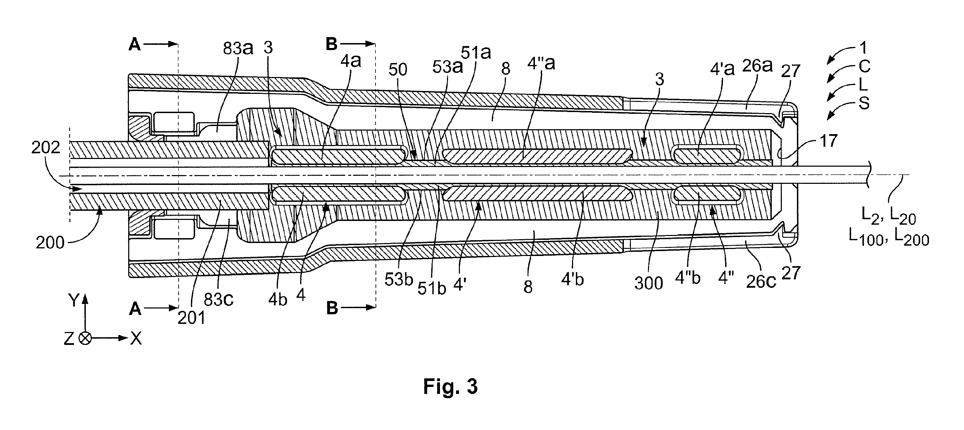

Fig. 3 shows the fixing device 1 in the closed and locked state C and L, respectively, in a schematic cross-sectional view along the longitudinal axis L₂₀, L₁₀₀ and L₂₀₀. This cross-section is made within a plane spanned within the lateral direction Y at the longitudinal direction X. As can be seen here, the clamping elements 4, 4', 4" form a channel between their respective clamping limbs 4a, 4b, 4'a, 4'b and 4"a, 4"'b, wherein the sleeve 50 is guided in parallel to the longitudinal direction X. The limbs 51 a and 51 b of the sleeve may each be formed such that they provide a cutting edge 53a and 53b, respectively. The cutting edges 53a, 53b protrude laterally from the sleeve 50 and cut into the clamping limbs 4a and 4b, 4'a and 4'b as well as 4"a and 4"b, respectively. Thereby, the sleeve 50 is in mesh with the clamping elements 4, 4' and 4". In other words, the sleeve 50, in detail the cutting edges 53a, 53b on the sleeve 50, overlap with the clamping elements 4, 4', 4" in detail the respective clamping limbs 4a, 4b, 4'a, 4'b, and 4"a, 4"b in and against the height direction Z.

The cutting edges 53a and 53b are optional. Even without the cutting edges, the clamping elements 4 provice sufficient grip on the limbs 51 a and 51 b.

Additionally the housing 2 provides a limit stop 17 for a front end of the sleeve 50 pointing into the longitudinal direction X such that the sleeve 50 is immobilised, i.e. blocked in the longitudinal direction X. A further limit stop (not shown) may be provided which faces into the longitudinal direction X in order to block and immobilise the sleeve 50 against movements towards the longitudinal direction X.

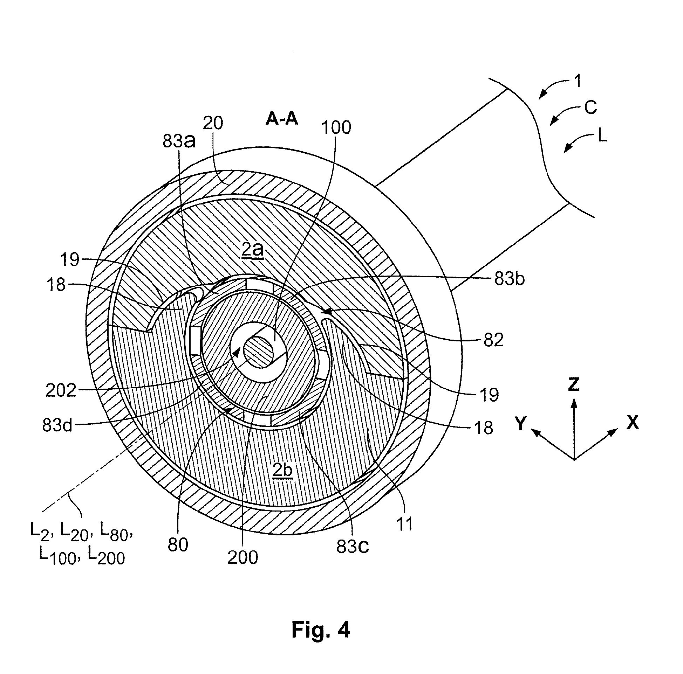

Further, the inner space 3 of the housing 2 is filled up with a sealing substance 300. Hence, the fixing device is in a sealed state S wherein the optical fibre, the sleeve 50 and the end section 201 of the tube 200 are sealed up within the housing 2. Fig. 4 is a cross-sectional view of the fixing device 1 in the closed and locked state C and L, respectively. A cross-section is made along the cross-sectional line A-A depicted in Fig. 3.

As can be seen, the inner rim 11 of the housing part 2b is provided with two points 18 which at least in their cross-section have the shape of bent cones. The pins 18 encompass the ferrule 80, in detail the clamping elements 83a to 83d at the neck 82 of the ferrule 80. Thereby, the points 18 cling to the neck 82 and grab the ferrule 80 such that it is immobilised in the height direction Z. Cut-outs 19 are formed at the other housing part 2a in order to take up the points 18. Thereby, the housing parts 2a and 2b have a complementary shape and are in mesh with each other.

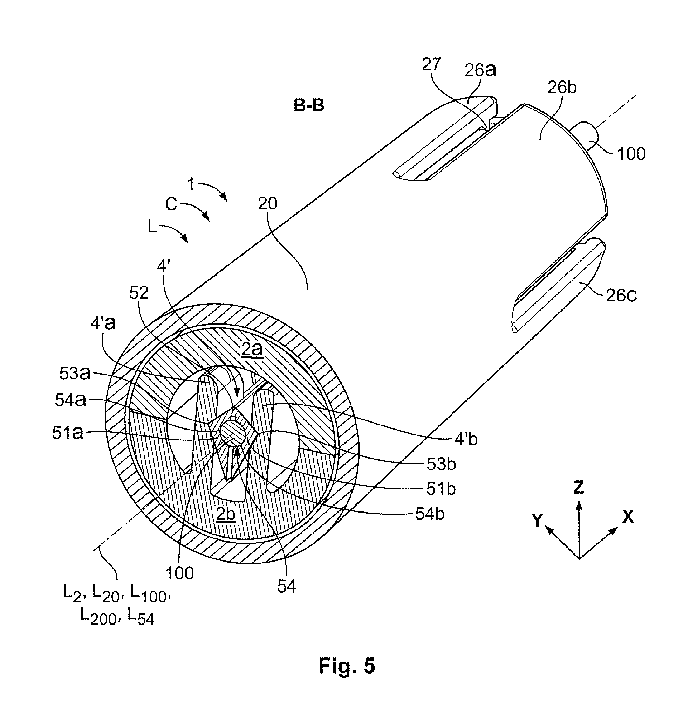

Fig. 5 is a schematic cross-sectional view of the fixing device 1 taken along the cross-sectional line B-B depicted in Fig. 3. Here it becomes apparent that the cutting edges 53a and 53b are in mesh with the clamping limbs 4'a and 4'b, respectively, of the clamping element 4'. Further, a receptacle 54 is formed with the sleeve 50. The receptacle 54 has a longitudinal axis L₅₄ extending in parallel to the longitudinal direction X and being arranged coaxial to the housing 2, the locking member 20, the ferrule 80, the fibre 100 and the tube 200. The receptacle 54 comprises two grooves 54a and 54b which are formed in the limbs 51 a and 51 b, respectively, and oppose each other in the lateral direction Y.

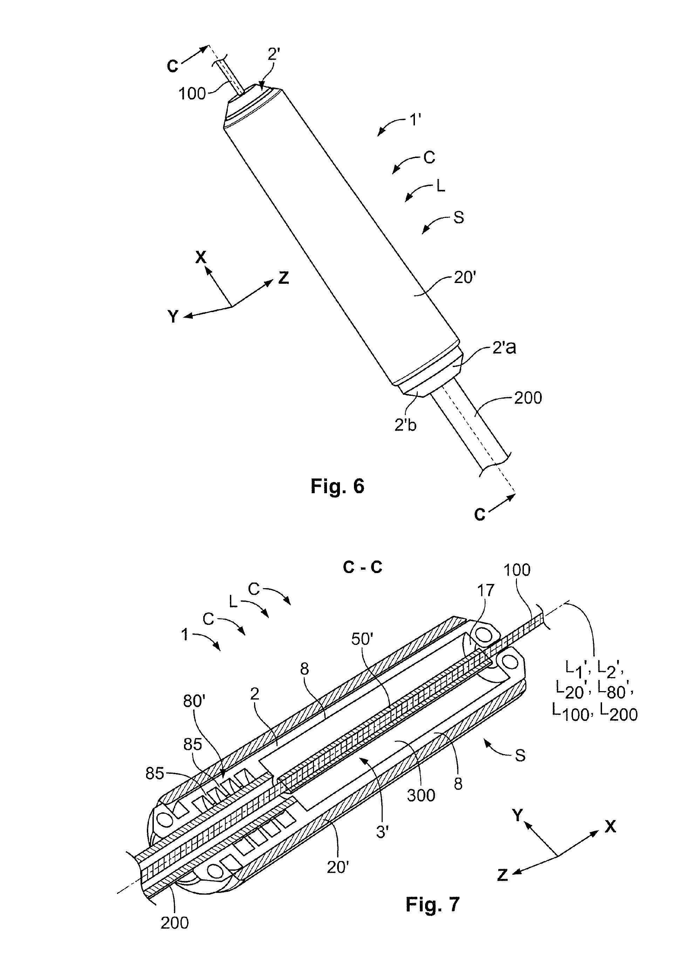

Fig. 6 is a schematic perspective view of the fixing device 1' according to another embodiment of the present invention. The fixing device 1' comprises a housing 2' having two housing parts 2'a and 2'b. The fixing device 1 is in the closed, locked and sealed state, C, S and L, respectively, wherein it fixes and seals up the optical fibre 100 with respect to the tube 200. The fixing device 1' is locked by a locking member 20'.

Fig. 7 is a schematic cross-sectional view of the fixing device 1', the fibre 100 and the tube 200 along the cross-sectional line C-C depicted in Fig. 6. The cross-section is made along the longitudinal axis L₁', L₂', L₂₀', L₈₀', L₁₀₀, L₂₀₀ of the fixing device 1', the housing 2', the locking member 20', a ferrule 80', the fibre 100 and the tube 200, respectively. The fixing device 1', the housing 2', the locking member 20', the ferrule 80', the fibre 100 and the tube 200 are arranged coaxial.

The ferrule 80' is integrated into the housing 2', i.e. the ferrule 80' and the housing 2' are integrally formed. The ferrule 80' comprises lamellas 85. The lamellas 85 are formed as rings which are arranged coaxial to the housing 2 and provide cutting edges for penetrating the tube 200. Thereby, the tube 200 is centred within the housing 2' and immobilised in and against the longitudinal direction X. Further, the fibre 100 is held by a sleeve 50' which encompasses the fibre 100 and is immobilised in the longitudinal direction X at the limit stop 17. The sealing substance 300 within an inner space 3' of the housing 2 seals up the sleeve 50' and the fibre 100, as explained above.

Deviations from the embodiments described above are possible within the inventive idea: the fixing device 1,1' may comprise a housing 2, 2' in whatever form desired and have housing parts 2a, 2b, and 2'a, 2'b, which may be designed as required for closing the housing 2, 2' and provide an inner space 3, 3'. The clamping elements 4, 4', 4" may be designed as fixing elements which may be formed as desired in order to enable a force fit, a frictional fit and/or a positive fit of the sleeve 50. Hence, also the clamping limbs 4a, 4b, 4'a, 4'b, 4"a, 4"b may be shaped in whatever form desired for arresting and channelling the sleeve 50, 50'.

The inlet opening 5 and the outlet opening 6 may be formed as desired for letting the fibre 100 and/or the tube 200 enter and exit the fixing device 1, 1'. It is not obligatory that the openings 5, 6 are divided into opening section 5a, 5b and 6a, 6b, respectively.

The wall portion 7, the face of the wall portion 8 as well as the point 18 and the cut-out 19 may be designed as desired for shaping the housing parts 2a, 2'a, 2b, 2'b in a complementary manner. The locking zone may comprise locking elements such as outer grooves 10, inner rims 11 and/or inner grooves 12 in whatever number and shape desired in order to lock a ferrule 80 at the fixing device 1,1'. Also the ferrule 80 may be provided with outer rims 81, necks 82 and/or clamping members 83 in whatever number and shape desired in order to interact with a locking zone 9 of the housing 2, 2'.

The housing 2, 2' may be provided with ledges 13, collars 14, shaft sections 15 and/or latching elements 16 in whatever number and shape desired in order to enable a proper locking of the housing 2, 2' in the closed state. Analogously, the locking member 20, 20' may have openings 21, ledges 23, collars 24, shafts 25 and/or counter latching elements in whatever form and shape desired in order to arrest the locking member 20, 20' in the locked state.

The sleeve 50, 50' may have limbs 51 a, 51 b, hinges or bending zones 52, cutting edges 53a, 53b in whatever number and form desired in order to enable a reliable fixing of the sleeve at or within the housing 2, 2'. The ferrule 80, 80' may be provided as a separate piece or may be integrated into the housing. The ferrule 80, 80' may have outer rims 81, necks 82, clamping members 83, bevels 84 and/or lamellas 85 in whatever number and form desired in order to arrest the ferrule 80, 80' and hold the tube 200 therewith.

The sleeve 50, 50' may have a tubular or flat form with a rounded, e.g. circular, or polygonal cross-section. The cross-section of the sleeve 50, 50' may be initially open or closed. An open cross-section enables the sleeve 50, 50' to be mounted onto the fibre 100 from the lateral direction Y, i.e. from a radial direction of the fibre which may be especially advantageous when handling splices. The sleeve 50, 50' may be stiff or rigid at least in the longitudinal direction X and may prevent bending the fibre 100 at the latest when mounted onto the fibre 100 and/or the housing 2, 2'.

Finally, the sealing substance 300 may be any kind of compound, such as mastic, resin, or silica gel for example, which is suitable for sealing up the housing 2, 2'. The sealing substance 300 is preferably environmentally friendly in order to not contravene the object of the present invention. The sealing substance 300 does not need to have a fixing or immobilising function. Hence, the sealing substance may be rather soft such that it does not need a significant time for hardening.

## Claims

1. Fixing device (1, 1') for fixing an optical fibre (100) with respect to a tube (200) accommodating the fibre (100), comprising a housing (2, 2') which is adapted to at least partially enclose the fibre (100) and an end section (201) of the tube (200) **characterised in that** a sleeve (50, 50') is provided, which is adapted to hold the fibre (100) and to be arrested at the housing (2,2').

2. Fixing device (1, 1') according to claim 1, **characterised in that** the sleeve (50, 50') is adapted to be at least partially wrapped around the fibre (100).

3. Fixing device (1, 1') according to claim 1 or 2, **characterised in that** the sleeve (50, 50') is provided with at least two limbs (51 a, 51 b) which are connected to each other via a hinge (52).

4. Fixing device (1, 1') according to one of claims 1 to 3, **characterised in that** the sleeve (50, 50') has a bending zone (52) where the sleeve (50, 50') may be bent in order hold the fibre (100).

5. Fixing device (1, 1') according to one of claims 1 to 4, **characterised in that** the sleeve (50, 50') is provided with at least one groove (54a, 54b) which is adapted to at least partially accommodate the fibre (100).

6. Fixing device (1, 1') according to one of claims 1 to 5, **characterised in that** the sleeve (50, 50') comprises at least one cutting edge (53a, 53b) being adapted to cut into the housing (2, 2').

7. Fixing device (1, 1') according to one of claims 1 to 6, **characterised in that** the sleeve (50, 50') is at least partially formed of metal.

8. Fixing device (1, 1') according to one of claims 1 to 7, **characterised in that** the housing (2, 2') provides at least one clamping element (4, 4', 4") which is adapted to hold the sleeve (50, 50').

9. Fixing device (1, 1') according to one of claims 1 to 8, **characterised in that** at least one limit stop (17) is formed at the housing (2, 2'), the at least one limit stop (17) being adapted to block the sleeve (50, 50') at least in a longitudinal direction (L₅₀) of the sleeve (50, 50').

10. Fixing device (1, 1') according to one of claims 1 to 9, **characterised in that** the housing (2, 2') provides a locking zone (9) adapted to arrest a ferrule (80) for holding the end section (201) of the tube (200).

11. Fixing device (1, 1') according to one of claims 1 to 10, **characterised in that** the housing (2, 2') is formed of two complementary housing parts (2a, 2b, 2'a, 2'b) which are at least partially separated from each other in an open state (0) of the housing (2, 2') essentially along a longitudinal axis (L₂) of the housing (2, 2').

12. Fixing device (1, 1') according to one of claims 1 to 11, **characterised in that** it further comprises a locking member (20, 20') which is adapted to at least partially encompass the housing (2, 2') and to lock the housing (2, 2') in a closed state (C) of the housing (2, 2').

13. Kit for a fixing device (1, 1') for fixing an optical fibre (100) with respect to a tube (200) accommodating the fibre (100), **characterised in that** the kit comprises a sleeve (50, 50') which is adapted to hold the fibre (100) and to be arrested at the housing (2, 2').

14. Method for fixing an optical fibre (100) with respect to a tube (200) accommodating the fibre (100), **characterised in that** the method comprises the steps of holding the fibre (100) with a sleeve (50, 50') and arresting the sleeve (50, 50') at a housing (2, 2').

15. Method according to claim 14, **characterised in that** in a further step, the housing (2, 2') is filled with a sealing substance (300).
